# EUROPEAN PATENT SPECIFICATION

(11) **EP 3 516 513 B1**
(45) Date of publication and mention of the grant of the patent: **17.03.2021**
(21) Application number: 17788295.8
(22) Date of filing: 20.09.2017
(51) Int. Cl.: G06F 9/455, G06F 21/57

(54) **APPLICATION TOKEN THROUGH ASSOCIATED CONTAINER**
ANWENDUNGSTOKEN DURCH ZUGEHÖRIGEN CONTAINER
JETON D'APPLICATION PAR L'INTERMÉDIAIRE D'UN RÉCIPIENT ASSOCIÉ

(30) Priority: 21.09.2016 US 201662397846 P; 15.05.2017 US 201715595824
(43) Date of publication of application: 31.07.2019
(73) Proprietor: Telefonaktiebolaget LM Ericsson (PUBL), 164 83 Stockholm (SE)
(72) Inventor: BROWN, Michael, Fremont, CA 94539 (US); TELLEZ, Juan, Oakland, CA 94611 (US)
(74) Representative: Ericsson
(86) International application number: PCT/IB2017/055709
(87) International publication number: WO 2018/055532

(56) References cited:
- US-A1- 2009 323 941
- US-A1- 2015 310 188
- US-B1- 8 533 796
- Anonymous: "Using Instance Profiles - AWS Identity and Access Management", , 23 August 2016 (2016-08-23), XP055718819, Retrieved from the Internet: URL:https://web.archive.org/web/2016082300 2420/https://docs.aws.amazon.com/IAM/lates t/UserGuide/id_roles_use_switch-role-ec2_i nstance-profiles.html [retrieved on 2020-07-29]

## Description

### TECHNICAL FIELD

Embodiments of the invention relate to the field of secured execution of applications in virtualized execution environments; and more specifically, to the authorization of an application to securely access an application programming interface with a token issued specifically to the application.

### BACKGROUND

Virtualization in the area of computing systems is the creation of a virtual (rather than physical) representation of some aspect of the computing system. Operating system level virtualization is an example of virtualization where a server is virtualized often to provide more secure hosting environments in server farm, datacenter, cloud computing or similar distributed computing systems. Operating system level virtualization can securely manage fixed physical computing system resources amongst a set of users. These users may be from competing entities and thus need to have secured execution environments to prevent the other users from gaining access to our interfering with their programs. The virtualization may be structured as a platform that manages a set of separate operating environments as containers, virtualization engines or similar instances. The platform manages the physical computing system resources amongst the set of operating environments. Each of these instances may access or request resources via a set of interfaces including a secure Application Programming Interface (API).

Typically, the secure API requires that a user making a request, or call, to the platform perform an authentication process prior to the platform allowing the calling request to proceed. This authentication process is often accomplished through the use of a session token, used in the context of single-user sign-on. A user will authenticate himself/herself and receive a session token as a result of successful authentication. The session token can then be used to make calls to the secure API as an indication that the user has permission to proceed.

This system for authentication works well in the case when a user is manually interacting with the API requiring authentication, but represents a problem in the context of an automated entity, such as an application or similar program, attempting to perform a similar call to the secure API. With the API requiring the caller to directly authenticate, such as with a user name and password, the application relying on the authentication of the user will be required to internally store the credentials of the user or obtain them through another automated means, neither of which is considered safe handling of user credentials.

The use of a token in place of user credentials can eliminate the need for inclusion of user credentials in the application code. However, to obtain the token, the application would still need to authenticate itself as a requirement of the token issuance protocol, which would require direct intervention of the user or including the credentials in the application. This problem is often resolved by sharing the user's token with the application. The user will authenticate themselves, obtain a token and then share their user token with the application. However, this gives the application complete access to all of the resources and data that the user has access to and further undermines the security of the system in that the user token could then be transferred to another entity unknown to the user. Thus, giving an application a user token presents a discrete security risk.

In addition, providing a user token to the application requires that the application be configured or programmed to specifically handle the user token to make requests to the secured platform interfaces and to perform similar operations using the user token. Thus, the handling of the user token is not transparent to the application requiring an investment to configure each application to be compatible. Each application may handle the tokens differently and this can increase the complexity and cost in the operation of the platform.

US 2015310188 discloses capabilities for managing digital rights management (DRM) protected content sharing in a networked secure collaborative computer data exchange environment through a secure exchange facility managed by an intermediate organizational entity amongst users of a plurality of other organizational entities, wherein computer data content and access rights for the computer data content is shared between a first and second user, the computer data content and access rights for the computer data content are transformed into a DRM protected computer data content through communications with a DRM engine, wherein the DRM engine is selected based on a content type of the computer data content, and the DRM engine is provided by an entity other than the intermediate organizational entity and other than any of the plurality of other organizational entities. US 8533796 B1 discloses a token providing system that stores a primary authentication token that is used to obtain temporary authentication tokens. The token providing system provides, to application programs that are unable to access the primary authentication token, the temporary authentication tokens. Upon receiving, from a first application program of the application programs, a first request to obtain a first temporary authentication token, the token providing system transmits a second request including the primary authentication token to obtain the first temporary authentication token. The token providing system then receives the first temporary authentication token and provides the first temporary authentication token for use by the first application program.

### SUMMARY

The present invention is defined by the appended independent claim(s), to which reference should now be made. Specific embodiments are defined in the dependent claims.

### BRIEF DESCRIPTION OF THE DRAWINGS

The invention may best be understood by referring to the following description and accompanying drawings that are used to illustrate embodiments of the invention. In the drawings:
Figures 1A and 1B are diagrams of one embodiment of a network of computing devices functioning as a set of server hosts for virtualized execution environments.
Figure 2 is a diagram of one embodiment of a process for application token generation and installation.
Figure 3 is a flowchart of one embodiment of a process of a container manager to generate an application token.
Figure 4 is a diagram of one embodiment of a process for application token management by an application helper.
Figure 5 is a flowchart of one embodiment of a process by a container manager to establish a container, application helper and application token.
Figure 6 is a flowchart of one embodiment of a process by an application helper to process requests for a secured platform interface from the associated application.

### DETAILED DESCRIPTION

The following description details methods and apparatus for generating and managing application tokens. Use of an application token replaces the need for an application to utilize the credentials of a user or for the user to provide a caller token to the application. The embodiments avoid the need to share the user credentials with an application by issuing a token specific to the application. The token contains information that uniquely identifies the application. An authorization set of the application can then be determined specific to the application and can be based on the authorization set of the user and/or platform policies. An application token is issued where the requesting entity has the necessary authorization. The requesting entity can be a user or another application. The application token can then be utilized by the application in place of user credentials.

Further embodiments provide a process and system for managing the application token. In many cases it is desirable to make the application token usage as transparent as possible to the application to which it is issued. This enables the use of existing applications without modification for the use and management of the application token. Further, the process and system standardize the handling of the application tokens across applications, such that the platform does not have to support a varied array of differing application token handling methods and systems. The embodiments provide an application helper that receives the application token, intercepts requests from the associated application for secured platform interfaces, and provides the application token with the request to the platform. Further, the application helper can manage the renewal of the application token on behalf of the application.

In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present invention. It will be appreciated, however, by one skilled in the art that the invention may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed text and blocks with dashed borders (e.g., large dashes, small dashes, dot-dash, and dots) may be used herein to illustrate optional operations that add additional features to embodiments of the invention. However, such notation should not be taken to mean that these are the only options or optional operations, and/or that blocks with solid borders are not optional in certain embodiments of the invention.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) includes hardware and software, such as a set of one or more processors coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set or one or more physical network interface(s) to establish network connections (to transmit and/or receive code and/or data using propagating signals) with other electronic devices. One or more parts of an embodiment of the invention may be implemented using different combinations of software, firmware, and/or hardware.

A network device (ND) is an electronic device that communicatively interconnects other electronic devices on the network (e.g., other network devices, end- user devices). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video).

A token is a security credential that is compact and a self-contained way for securely proving one's identity electronically. The payload can contain information about the authenticated user, an expiration and additional claims.

A user token is a token issued to a user, and contains information identifying the respective user.

An application token is a token issued to an application. It has information that identifies the application for which it is issued.

A platform is an abstraction of technologies that consists of resources that can be utilized as necessary for the purpose of providing a base for services and applications.

A container is a virtualization of an operating environment that allow you to run applications and their dependencies in resource-isolated processes.

A secured interface is a boundary that separates components of a computer system, which allows information exchange after authentication and validation of the requester. Authorization may occur at or after the secured interface, for example as part of a called function.

The prior art relies on the providing of a user token to applications needing access to secured interfaces of the platform. However, sharing a user token with an application is considered a bad practice and a potential security risk. Tokens may not, and typically don't, contain enough information for the receiver of a request including a token, such as an application programming interface (API) call to validate that the token actually comes from the entity that the token represents. In other words, simple possession of the token is considered insufficient to authenticate the sender of the request or the API caller. Any possessor of the token will be able to make authenticated requests such as API calls including API calls to a secure interface, such as a secure API interface of a virtualization platform.

Allowing an application to possess the user token creates a situation in which the user loses exclusive control of their authenticated token. The user no longer has sole possession of their token and cannot control if/when the token, held by the application, will be used or shared. The token can be compromised if the application were to present the token to the wrong party, output a readable core dump or allow read permission for another user. Similarly, an application having the user token has the same authorization set as the user. In other words, the application has all the rights and permissions that the user does. This may not be ideal where a user would prefer to give an application a lesser authorization set. In addition, the application that receives a user token has to be designed and implemented to take explicit actions to handle, manage and use the user token. This requires specific code to be implemented that will be aware of and secure the user token and be knowledgeable about how and when to use the user token.

The embodiments overcome the problems of the prior art by the generation and management of an application token. Since it is disadvantageous to share the user token or user credentials (e.g., username/password) with the application, the embodiment issues a separate token to the application itself. The token is not created for the user but, instead, is specifically created for the application. The application token contains information that uniquely identifies the application. Including applications running in a container. In some embodiments the authorization set of the application token is determine based on the authorization set of a caller or user that generated the application token. The embodiments determine if sufficient permission exists to start an application, including in a virtualization platform in a container application and then generate an application token for the container application. In other words, an application token will only be issued for the container application if the entity requesting the application token has sufficient permission. The container application's token identifies the application such that the authorization set for the application can be determined for secured API requests and similar requests coming from the container application.

Having an application token created and issued specifically for the application has the advantages of not requiring the use of the user's token by the application, thereby enabling the user to maintain control of their token and enabling accurate auditing of each token's use (i.e., retain the ability to track which token, and hence which caller/user, requested or was used to perform an action). Also, the application token allows for the defining of a separate authorization set that determines the extent to which the container application is permitted to perform actions. Specifically, the authorization set for the application can be different from the authorization set allowable for the user, caller or entity that created the application. As a whole, this improves the security of the system.

In addition, the embodiments overcome the limitations of the prior art by providing a process and system for managing the application token. The application token is issued to an application helper in a container, rather than the primary application itself. The application token is not generated for the user or requester, instead it is specifically created for the primary application, but given to an application helper that is specific to the primary application. The token still contains unique identification information for the primary application, but to avoid having the primary application needing token management modification, the application helper maintains the application token on behalf of the primary application. Thus, the primary application requires no handling of or knowledge of the application token. The application helper intercepts requests from the primary application that require the application token, and inserts the application token in those requests. Further, the application helper can handle the renewal of the application token as needed.

The use of an application helper provides advantages over the prior art, by not requiring the primary application to be modified to handle application tokens. Thus, the process and system are compatible with applications even if not designed for handling application tokens.

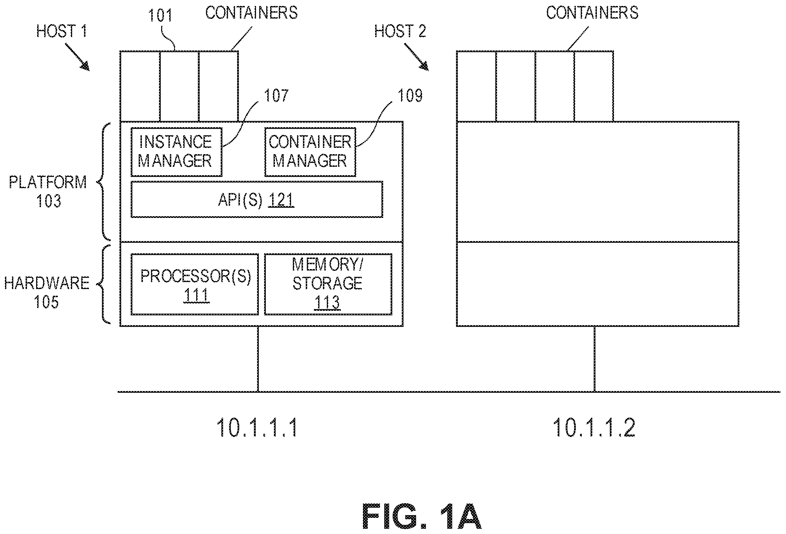

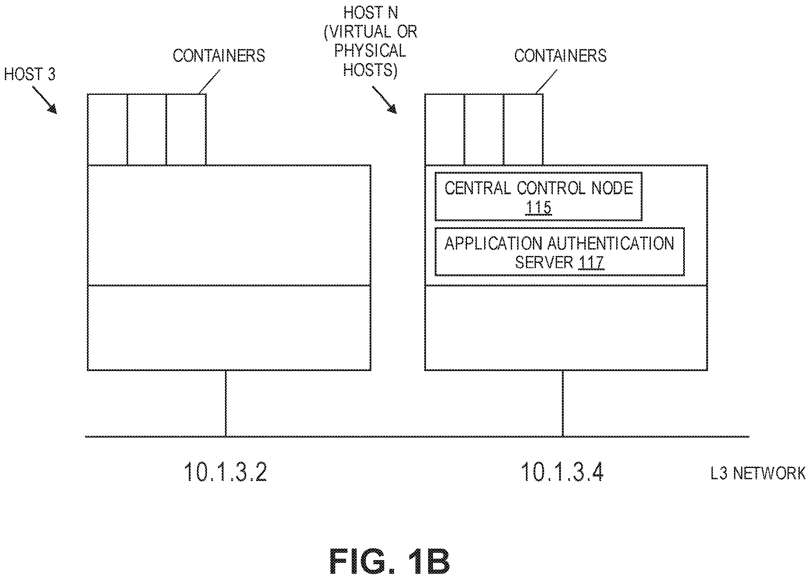

Figures 1A and 1B are diagrams of one embodiment of a network of computing devices functioning as a set of server hosts for virtualized execution environments. The Figures 1A and 1B provide one example of a set of computing devices that implement a virtualization platform. In other embodiments, the platform may be implemented by a single computing device with any configuration of hardware, while in further embodiments, the components of the virtualization platform may be distributed in other combinations and permutations as would be understood by one of skill in the art. In the example embodiment, the computing devices (Host(s) 1-N) are connected with one another over a local area network in this example an L3 network. In other embodiments, the computing devices can be connected over any type of network, interconnect or communication system.

The computing devices (Hosts 1-N) can have similar or varied computing resources, including differing processing capabilities, storage capabilities and similar physical hardware differences. While the examples are primarily discussed in terms of physical computing devices serving as hosts, one skilled in the art would understand that additional levels of virtualization are possible such that the platform may execute on a set of virtual hosts. For sake of clarity, the hosts are discussed as physical computing devices.

Each of the computing devices includes hardware 105 comprising a set of one or more processor(s) 111 (which can be any type of general purpose of application specific processors), network interface controller(s) (NICs; also known as network interface cards) (which include physical and virtual interfaces), non-transitory machine readable storage media 113 having stored therein software including the software that implements the embodiments described herein, and similar components. During operation, the processor(s) 111 execute the software to instantiate the platform 103 including any number of constituent components such as an instance manager 107, container manager 109, application programming interfaces (APIs) 121 and similar components, as well as one or more sets of one or more applications. The embodiments may use different forms of virtualization. For example, in one embodiment the virtualization platform may encompass the kernel of an operating system (or a shim executing on a base operating system) that allows for the creation of multiple instances called software containers or simply 'containers' 101 as used herein that may each be used to execute one (or more) of the sets of applications supported by the platform, where the multiple containers 101 (also called virtualization engines, virtual private servers, or jails) are user spaces (typically a virtual memory space) that are separate from each other and separate from the kernel space in which the operating system is run, and where the set of applications running in a given container or user space, unless explicitly allowed, cannot access the memory of the other containers or processes. In another embodiment the virtualization platform encompasses a hypervisor (sometimes referred to as a virtual machine monitor (VMM)) or a hypervisor executing on top of a host operating system, and each of the sets of applications is run on top of a guest operating system within an instance called a virtual machine (which may in some cases be considered a tightly isolated form of software container) that is run on top of the hypervisor - the guest operating system and application may not know they are running on a virtual machine as opposed to running on a "bare metal" host electronic device, or through para-virtualization the operating system and/or application may be aware of the presence of virtualization for optimization purposes. In further embodiments, one, some or all of the applications are implemented as unikernel(s), which can be generated by compiling directly with an application only a limited set of libraries (e.g., from a library operating system (LibOS) including drivers/libraries of OS services) that provide the particular OS services needed by the application. As a unikernel can be implemented to run directly on hardware 105, directly on a hypervisor (in which case the unikernel is sometimes described as running within a LibOS virtual machine), or in a software container, embodiments can be implemented fully with unikernels running directly on a hypervisor represented by virtualization platform 103, unikernels running within software containers represented by instances 101, or as a combination of unikernels and the above-described techniques (e.g., unikernels and virtual machines both run directly on a hypervisor, unikernels and sets of applications that are run in different software containers).

While embodiments of the invention are illustrated with reference to containers 101 corresponding to one VNE 'A60A-R, alternative embodiments may implement this correspondence at a finer level granularity (e.g., line card virtual machines virtualize line cards, control card virtual machine virtualize control cards, etc.); it should be understood that the techniques described herein with reference to a correspondence of instances 'A62A-R to VNEs also apply to embodiments where such a finer level of granularity and/or unikernels are used.

In certain embodiments, the virtualization platform includes a virtual switch that provides similar forwarding services as a physical Ethernet switch. Specifically, this virtual switch forwards traffic between containers 101 or instances and the NIC(s), as well as optionally between the containers 101 or instances; in addition, this virtual switch may enforce network isolation between the various components of the platform that by policy are not permitted to communicate with each other (e.g., by honoring virtual local area networks (VLANs)).

In some embodiments, hosts 1-N may communicate via a virtual network, which is a logical abstraction of a physical network that provides network services (e.g., L2 and/or L3 services). A virtual network can be implemented as an overlay network (sometimes referred to as a network virtualization overlay) that provides network services (e.g., layer 2 (L2, data link layer) and/or layer 3 (L3, network layer) services) over an underlay network (e.g., an L3 network, such as an Internet Protocol (IP) network that uses tunnels (e.g., generic routing encapsulation (GRE), layer 2 tunneling protocol (L2TP), IPSec) to create the overlay network).

The virtualization platform 103, as discussed above can include various components including an instance manager 107, container manager 109, various APIs 121, a central control node 115, an application authentication server 117 and similar components. This listing is not intended to be exhaustive, rather it sets forward those components most directly affected by the processes and embodiments described herein. These components can be spread across any combination of the hosts 1-N in any combination and permutation. Some components, such as the instance manager 107 may have instances on each host, while others such as the application authentication server 117 may be present in only a subset of the hosts.

The instance manager 107 may be responsible for generating processes and jobs in the platform. The instance manager 107 can facilitate the instantiation of applications and containers. The container manager 109 manages the generation of tokens for the applications in the platform and can also facilitate the generation of the containers and applications.

APIs 121 are sets of functions that applications, user (e.g., via a command line interface, terminal or similar interface) and similar entities utilize to request resources of the platform including hardware 105. These functions, when invoked, are often referred to as 'calls' to the API. Some or all of these APIs can be considered secure APIs that require authentication of the requester before the requests are processed. The authentication is generally tied to a set of permissions or an authorization set of a user who has a set of user credentials that in turn can form or generate a user token. The user credentials or user token can be processed by an authentication server such as the application authentication server 117 to verify that the user credential or the user token are valid or authorized.

A central control node 115 can manage the intercommunication and coordination of the various hosts 1-N to implement the functions of the platform. The platform when distributed can have a centralized or distributed control organization. Where centralized, the central control node 115 can manage the components and communication between the components of the platform. The central control node 115 can be implemented on a host for containers 101. However, in other embodiments, the central control node 115 is executed on a separate node or remote from hosts of containers 101.

The platform can support any number of containers 101 distributed across any number of the hosts 1-N and in any distribution or organization of the containers 101. The containers can be fixed to a particular host or can be configured by the platform to be capable of being moved, for example for load balancing, across the set of hosts 1-N. The containers can have varying user space sizes, accessible resources and similar variations in characteristics.

The algorithms and displays presented herein are not inherently related to any particular computer or other apparatus. Various general-purpose systems may be used with programs in accordance with the teachings herein, or it may prove convenient to construct more specialized apparatus to perform the required method transactions. The required structure for a variety of these systems will appear from the description above. In addition, embodiments of the present invention are not described with reference to any particular programming language. It will be appreciated that a variety of programming languages may be used to implement the teachings of embodiments of the invention as described herein.

An embodiment of the invention may be an article of manufacture in which a non-transitory machine-readable medium (such as microelectronic memory) has stored thereon instructions which program one or more data processing components (generically referred to here as a "processor") to perform the operations described above. In other embodiments, some of these operations might be performed by specific hardware components that contain hardwired logic (e.g., dedicated digital filter blocks and state machines). Those operations might alternatively be performed by any combination of programmed data processing components and fixed hardwired circuit components.

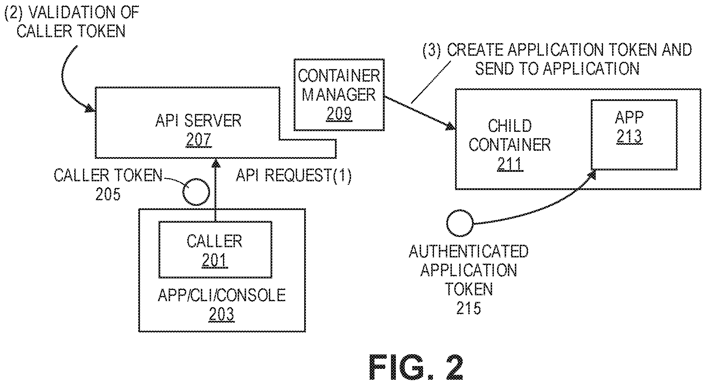

Figure 2 is a diagram of one embodiment of a process for application token generation and installation. The diagram illustrates a basic embodiment where a user or similar entity is a caller 201 that requests the start of an application 213 and, as a part of this process, the creation of a container 211 hosting the application. The caller 201, a user using a command line interface, console, or a container application, has previously been authenticated and holds a valid authentication token which, in conjunction with proper authorization, permits the caller to request the start of the application 213. The application 213 is to run in the created container 211 and is issued an application token 215 that can be used by the application 213 to make requests through the secure API 207. The application token 215 may be issued only after authentication of the caller token or similar authorization is obtained.

The caller token 205, such as a user token or where the caller is an application the authenticated application token of the caller, is not passed on to the child container 211 or the application 213. Instead a new application token 215 is issued specifically for the child container application 213 and is used only by the child container application 213. The new application token 215 contains information that identifies the container application 213 for which it is created. The new application token 215 may be secured by the signature of a trusted parent entity, or similar mechanism and can therefore be validated that it is issued from a trusted source. Because the new application token 215 identifies the application 213 and can be validated, it can be used for authorization of the application 213. For example, the new application token 215 can allow the application 213 to read from a database of the platform or access similar resources as may be consistent with an authorization set for the new application token 215. This is significant because authorization is determined for the specific application token recipient. Therefore, each application can have its own authorization set.

Being able to identify a specific application allows authorization of the application 213 to be dissimilar from the caller 201 requesting the start of the application 213. In other words, the container application 213 can be authorized to perform actions that are less than, equal to, or greater than the authorization set of the caller 201. The application token 215 may also contain an expiration value that dictates the usability (lifetime) of the application token 215. Once the application token 215 has expired, either a new token will need to be issued for the container application 213, the container application 213 will need to "refresh" its existing token, or the container application 213 will no longer be permitted to make secure API 207 requests. Since the parent entity 209 can identify the container 211 it created, and its running application 213, a application token 215 can be reissued without the need for re-authentication.

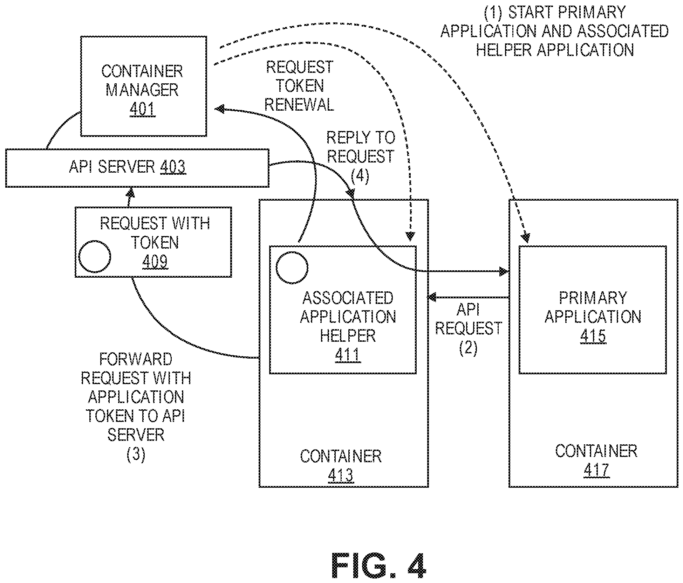

The diagram illustrates a basic scenario indicative of the process. The caller 201 via an application, command line interface (CLI), console or similar mechanism requests or makes a call to a secure API implemented by the API server 207 of the virtualization platform. The call or request can include the user or application token 205 of the caller 201. The API server 207 may validate the received token 205. Upon validation, the API server 207 can coordinate with other components of the platform to instantiate a container 211 in which an application 213 is to be instantiated. This may be in coordination with an instance manager or similar components of the platform. The API server 207 can further coordinate with a container manager 209 to generate a new application token 215 for the application 213. The container manager 209 determines the authorization set for the application token 215, which may be based on the authorization set of the token 205 of the caller, platform policies or any combination thereof. For example, in some cases the container manager 209 can manage an authorization set for the new application token 215 that is a subset of the authorization set of the caller. More specifically, the container manager 209 manages authorization sets as defined by a platform administrator for each user and/or application. The container manager 209 acts upon the permissions from these authorization sets. However, in other cases, the policies of the platform may enable an authorization set that is at least in some manner broader than the authorization set of the caller, i.e., granting the application 213 authorizations not available to the caller 201. As discussed further herein below with regard to Figure 4, the container manager 209 also may play a role in instantiating the child container 211 and a container for an application helper.

Thus, the embodiments of the process create a token on behalf of an application 213 running in a container; because the platform controls the container 211 and starts the application 213 running in that container, the identity of the application 213 is known and, as a result, the platform can determine the appropriate authorization set associated with the application 213. The signed application token 215 contains the information that an API service 207 can use to ascertain the identity of the application 213 and, hence, determine authorization for the application 213.

The operations in the flow diagrams will be described with reference to the exemplary embodiments of the other figures. However, it should be understood that the operations of the flow diagrams can be performed by embodiments of the invention other than those discussed with reference to the other figures, and the embodiments of the invention discussed with reference to these other figures can perform operations different than those discussed with reference to the flow diagrams.

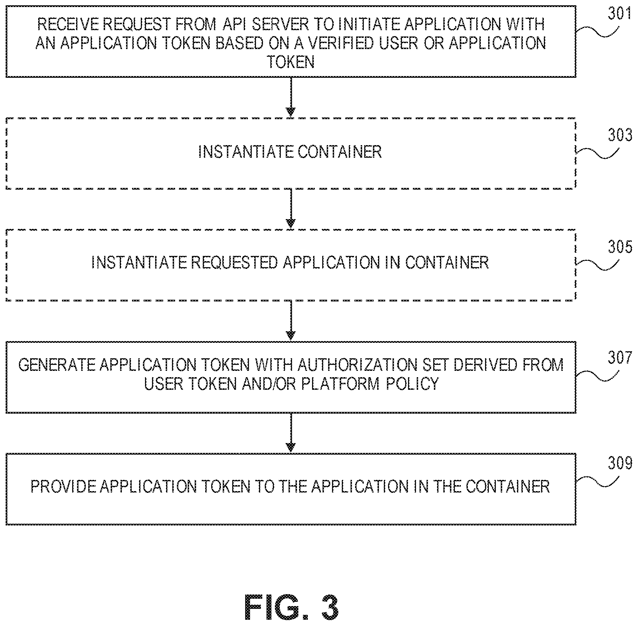

Figure 3 is a flowchart of one embodiment of a process of a container manager to generate an application token. The container manager participates in the generation and distribution of the application token in coordination with the API server and similar components of the platform. The container manager receives a request from the API server to initiate an application with an application token based on a verified caller token such as a user token (Block 301). The API server may have already validated the caller token, such as a user token or of the token of the entity that called the API server to request a function of the API that involves an instantiation of an application or similar scenario where an API server sends the authenticated caller token (e.g., user token or calling application token) to the container manager with the request to instantiate the application.

The container manager instantiates a container (Block 303) into which the application will be instantiated. The requested application is then instantiated in the container (Block 305). The container manager can directly instantiate the application or can work in coordination with other components of the platform to instantiate the application and container. With the container and the application instantiated or in parallel with the instantiation of the application, the container manager can coordinate the generation of the application token (Block 307). The application token can be generated to include any identification information unique to the application along with a digital signature or similar information for authentication. In addition, the application token can include or be tied to an authorization set. The container manager can enforce policies of the virtualization platform as they pertain to the creation of application tokens. The policies can define the type and scope of authorization sets to be given to the application tokens. In some example embodiments, the policies can restrict the authorization set to a subset of the authorization set of the caller. In some embodiments, the policies may include permissions in the authorization set that are not permitted to the caller. For example, an application may be authorized to access a local database that a caller is not authorized to directly access.

Once the application token has been generated, then the application token can be provided to the application in the container (Block 309). The application token may be issued to the specific application, however, in other cases, the application may not directly manage the application token itself. In some embodiments, the application is specifically coded to receive the application token and utilize the application token when making API calls or requests or performing other functions where the application token is utilized to authenticate that the application is authorized to invoke a function or call within the virtualization platform.

Figure 4 is a diagram of one embodiment of a process for application token management by an application helper. The diagram illustrates one example embodiment for handling the management of the application token where the application is not specifically modified or coded to handle the application token. Thus, the application need not be designed to work with application tokens and the embodiments provide a solution that is transparent to the application. This makes the solution highly compatible with a wide array of application.

As set forth above, an application token is generated in response to a call or request via a secure API (i.e., the API server) of the virtualization platform. When the application token is generated in a case where the application is not configured to handle and manage the application token, then the embodiments provide a mechanism to handle the application token. The application token is unique to a given application 415. When the application 415 seeks to make secure API requests via the API server or under similar circumstances, the application token is utilized to authenticate the application 415 and to identify the applicable authorization set. As mentioned above, the authorization set is the set of permissions or the set of commands that the application is allowed to invoke in the virtualization platform.

In the embodiments, when the application 415 is issued an application token, an application helper 411 is created before or in parallel to the application token. The application helper 411 is instantiated in a separate container 413 and there is a unique 1:1 relationship between the application 415 and the application helper 411. The container manager 401 can be solely or partially responsible for starting the application 415, container 417 for the primary application 415, the application helper 411 and the container 413 for the application helper 411.

Once this relationship is established, and the primary application 415 is running in its container 417, while the application helper 411 is running separately in a separate container.

At any time the primary application can make or issue a call to the secured API of the application platform. The application helper 411 is configured to intercept or receive these requests to the secured API at the time it is set up and established. The application helper 411 can then insert the application token for the application into the request, before forwarding the updated request 409 to the secured API server 403.

The secured API server 403 then services the request and returns a reply message or similar data to the application helper 411 who can then pass on the requested information from the API server 403 to the primary application 415. The form and amount of any given reply can vary significantly dependent on the call or function that is invoked. In addition, the application helper 411 can be responsible for handling the renewal of the application token. Each application token may contain an expiration value that identifies when the lifetime of the application token expires. Any system of timing or dating can be used to identify the expiration time. When an application token expires either a new token needs to be issued for the application helper or the application helper 411 requests to the API server 403 will fail authentication. The application helper 411 may determine a timing for renewal when a failed authentication message is returned by the API server 403 or the container manager 401 may check the expiration value and renew the application token when it expires or nears expiration.

In the example embodiment, a separate container 413 and application helper 411 is generated for each primary application 415.

For sake of security, scalability and availability, the 1:1 relationship is advantageous at the cost of added resources devoted to the overhead of the containers and application helpers.

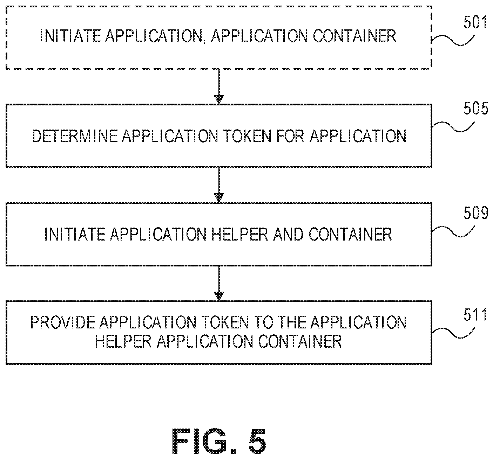

Figure 5 is a flowchart of one embodiment of a process by a container manager to establish a container, application helper and application token. The container manager is in some embodiments for establishing the set of applications and containers for managing the application token. Thus, the container manager has the primary responsibility of enforcing the policies and securities for the application token methods and system.

Upon notification from the API server of a request that has been received from an authenticated entity, the container manager begins the instantiation of the requested application and a container into which the application is placed for execution (Block 501). The code for the application and container can be stored in any location in communication with the container manager and the container manager is responsible for loading, reserving resources and starting the execution of the application and the container. At the same time, i.e., in parallel, or at approximately the same time, the container manager also generates an application token for the primary application (Block 505). The application token can contain any uniquely identifying information for the application, is associated with an authorization set that can be specified by the requester and/or policies of the virtualization platform.

A container for the application helper can then be instantiated (Block 509). The application helper container can be instantiated at any point in parallel or serial with the container of the primary application. Similarly, the application helper can be instantiated in the new container at any point with relation to the primary application and its container (Block 509). The application token, once generated can then be provided to the application helper (Block 511) to handle and manage as discussed below.

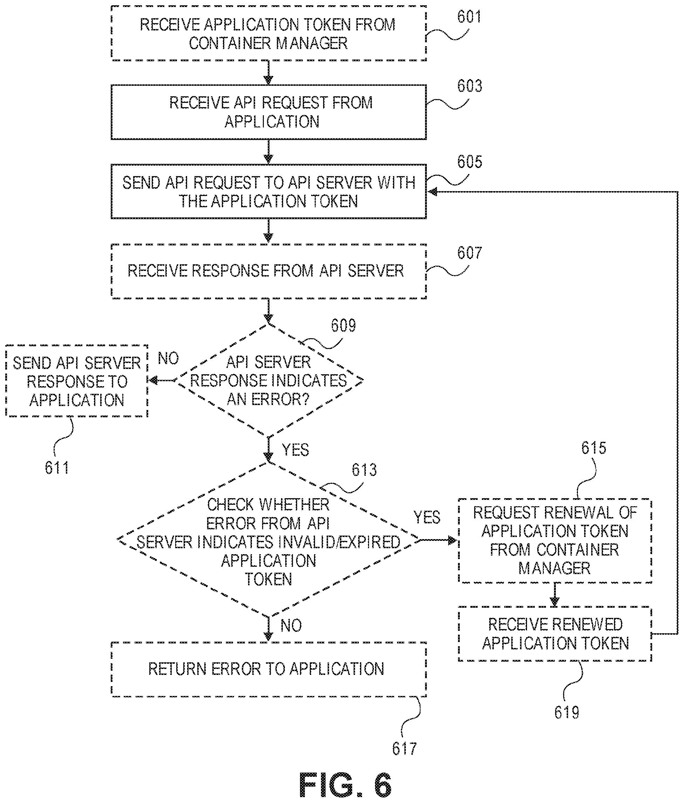

Figure 6 is a flowchart of one embodiment of a process by an application helper to process requests for a secured platform interface from the associated application. Once the application helper has been instantiated along with the primary application, then the application helper starts its function to intercept the requests of the primary application and to manage the renewal of the application tokens. This process may begin with the receipt from the container manager of the application token for the associated primary application (Block 601).

At this point the process monitors for or awaits the receipt of a secured API call or request from the primary application (Block 603). The application helper and its container may be configured to stand between the primary application and the API server, such that all requests from the primary application must traverse the application helper and its container. The received requests are then modified to insert the application token for the requesting application (Block 605). The API requests may include space for the application token or the API requests may be altered to enable the application token to be included. Once inserted, the API requests are sent on to the API server. The API server then processes the API request and send a response to the application helper (Block 607).

A check is made whether the response from the API server indicates an error has occurred (Block 609). In other words, was the API server able to authenticate the application token is determined based on the contents of the reply. If the response contains data for the primary application, then the reply data is sent to the primary application to be processed (Block 611). In this case, the application helper may then return to monitoring for additional API requests.

If however the API server response identifies an error, indicating that the application token has expired or is similarly invalid, then the process may shift to a renewal process to obtain a renewed application token. A check is made whether the error reported by the API server indicates that the application token is invalid or expired (Block 613). If the expiration is not the source of the error, then the reply data including the error data may be passed to the application for handling (Block 617).

Where the application token is invalid or expired, then the application helper requests renewal of the application token from the container manager (Block 615). Any validating information can be sent to accompany the request, however, the container manager will decide the renewal based on the policies of the virtualization platform. Once the renewed application token is received (Block 619), the process may be restarted to request the API server process the initial API request where the renewed token is inserted into the API request in place of the expired or invalid token. One skilled in the art would understand that the examples are provided by way of illustration and not limitations. Variations and alterations within the scope of the application have been omitted for sake of clarity in conveying the principles and features of the invention.

## Claims

1. A method in a container manager (401) to manage access to resources within a virtualization platform with the use of application tokens, where an application token includes information identifying a primary application (415) that can be used to manage access to the resources for the primary application (415), the method comprising:
generating (307) an application token for the primary application (415), where the primary application (415) is executed in a first container (417);
instantiating (303) a second container (413) and an application helper (411) to be executed therein, the second container (413) being separate from the first container (417), wherein the application helper (411) is specific to the primary application (415) such that a 1:1 relationship exists between the primary application (415) and application helper (411); and
providing (309) the application token to the application helper (411), wherein the application helper (411) manages API requests using the application token on behalf of the primary application (415).

2. The method of claim 1, further comprising:
initiating (501) the primary application (415) and the first container (417).

3. The method of claim 1, further comprising:
receiving (619) a renewal request for the application token from the application helper (411).

4. The method of claim 3, further comprising:
sending (605) a renewed application token to the application helper (411), in response to the renewal request.

5. A computing system configured to implement a method in a container manager (401) to manage access to resources within a virtualization platform with the use of application tokens, where an application token includes information identifying a primary application (415) that can be used to manage access to the resources for the primary application (415), the computing system comprising:
a non-transitory machine readable medium (113) having stored therein a container manager (401); and
a processor (111) coupled to the non-transitory machine readable medium (113), the processor (111) configured to execute the method in the container manager (401) to: generate an application token for the primary application (415), where the primary application (415) is executed in a first container (417); instantiate a second container (413) and an application helper (411) to be executed therein, the second container (413) being separate from the first container (417), wherein a 1:1 relationship exists between the primary application (415) and application helper (411); and provide the application token to the application helper (411), wherein the application helper (411) is configured to manage API requests using the application token on behalf of the primary application (415).

6. The computing system of claim 5, wherein the container manager (401) is further configured to initiate the primary application (415) and the first container (417).

7. The computing system of claim 5, wherein the container manager (401) is further configured to receive a renewal request for the application token from the application helper (411).

8. The computing system of claim 7, wherein the container manager (401) is further configured to send a renewed application token to the application helper (411), in response to the renewal request.

9. A method in an application helper (411), executed in a second container (413), to assist a primary application (415), executed in a first container (417) separate from the second container (413), to access resources within a virtualization platform with the use of application tokens, where an application token includes information identifying the primary application (415) that can be used to manage access to the resources for the primary application (415), wherein the application helper (411) is specific to the primary application (415) such that a 1:1 relationship exists between the primary application (415) and application helper (411), the method comprising:
receiving (601) an application programming interface, API, request from the primary application (415);
inserting (603) an application token of the primary application (415) into the API request; and
sending (605) the API request to an API server (403) with the application token.

10. The method of claim 9, further comprising:
receiving (607) response from the API server (403); and
determining (609) whether the received response indicates an error.

11. The method of claim 10, further comprising:
checking (613) whether the error indicates that the application token is invalid or expired; and
returning (611) the error to the primary application (415) in response to the error not indicating an invalid or expired application token.

12. The method of claim 9, further comprising:
requesting (615) renewal of the application token from a container manager (401); and
receiving (619) a renewed application token from the container manager (401).

13. The method of claim 9, further comprising:
sending (611, 617) a response from the API server (403) to the primary application (415).

14. A computing system configured to implement a method in an application helper (411), executed in a second container (413), to assist a primary application (415), executed in a first container (417) separate from the second container (411), to access resources within a virtualization platform with the use of application tokens, where an application token includes information identifying the primary application (415) that can be used to manage access to the resources for the primary application (415), wherein the application helper (411) is specific to the primary application (415) such that a 1:1 relationship exists between the primary application (415) and application helper (411), the computing system comprising:
a non-transitory machine readable medium (113) having stored therein the application helper (411); and
a processor (111) coupled to the non-transitory machine readable medium (113), the processor (111) configured to execute the method in the application helper (411) to: receive an application programming interface, API, request from a primary application (415); insert an application token of the primary application (415) into the API request; and send the API request to an API server (403) with the application token.

15. The computing system of claim 14, wherein the application helper (411) is further configured to receive a response from the API server (403), and to determine whether the received response indicates an error.

16. The computing system of claim 15, wherein the application helper (411) is further configured to check whether the error indicates that the application token is invalid or expired, and to return the error to the primary application (415) in response to the error not indicating an invalid or expired application token.

17. The computing system of claim 14, wherein the application helper (411) is further configured to request renewal of the application token from a container manager (401), and to receive a renewed application token from the container manager (401).

18. The computing system of claim 14, wherein the application helper (411) is further configured to send a response from the API server (403) to the primary application (415).

## Patentansprüche

1. Verfahren in einem Container-Verwalter (401) zum Verwalten von Zugriff auf Ressourcen innerhalb einer Virtualisierungsplattform mit der Verwendung von Anwendungstoken, wobei ein Anwendungstoken Informationen umfasst, die eine Primäranwendung (415) identifizieren und die zum Verwalten von Zugriff auf die Ressourcen für die Primäranwendung (415) verwendet werden können, wobei das Verfahren umfasst:
Erzeugen (307) eines Anwendungstokens für die Primäranwendung (415), wobei die Primäranwendung (415) in einem ersten Container (417) ausgeführt wird;
Instanziieren (303) eines zweiten Containers (413) und eines darin auszuführenden Anwendungsassistenten (411), wobei der zweite Container (413) vom ersten Container (417) getrennt ist, wobei der Anwendungsassistent (411) spezifisch für die Primäranwendung (415) ist, derart dass eine 1:1-Beziehung zwischen der Primäranwendung (415) und dem Anwendungsassistenten (411) besteht; und
Bereitstellen (309) des Anwendungstokens für den Anwendungsassistenten (411), wobei der Anwendungsassistent (411) API-Anforderungen unter Verwendung des Anwendungstokens im Namen der Primäranwendung (415) verwaltet.

2. Verfahren nach Anspruch 1, ferner umfassend:
Instanziieren (501) der Primäranwendung (415) und des ersten Containers (417).

3. Verfahren nach Anspruch 1, ferner umfassend:
Empfangen (619) einer Erneuerungsanforderung für den Anwendungstoken vom Anwendungsassistenten (411).

4. Verfahren nach Anspruch 3, ferner umfassend:
Senden (605) eines erneuerten Anwendungstokens an den Anwendungsassistenten (411) in Reaktion auf die Erneuerungsanforderung.

5. Computersystem, das so konfiguriert ist, dass es ein Verfahren in einem Container-Verwalter (401) zum Verwalten von Zugriff auf Ressourcen innerhalb einer Virtualisierungsplattform mit der Verwendung von Anwendungstoken implementiert, wobei ein Anwendungstoken Informationen umfasst, die eine Primäranwendung (415) identifizieren und die zum Verwalten von Zugriff auf die Ressourcen für die Primäranwendung (415) verwendet werden können, wobei das Computersystem umfasst:
ein nicht-transitorisches maschinenlesbares Medium (113), das einen Container-Verwalter (401) darauf gespeichert aufweist; und
einen Prozessor (111), der mit dem nicht-transitorischen maschinenlesbaren Medium (113) gekoppelt ist, wobei der Prozessor (111) so konfiguriert ist, dass er das Verfahren im Container-Verwalter (401) ausführt zum: Erzeugen eines ersten Anwendungstokens für die Primäranwendung (415), wobei die Primäranwendung (415) in einem ersten Container (417) ausgeführt wird; Instanziieren eines zweiten Containers (413) und eines darin auszuführenden Anwendungsassistenten (411), wobei der zweite Container (413) vom ersten Container (417) getrennt ist, wobei der Anwendungsassistent (411) spezifisch für die Primäranwendung (415) ist, derart dass eine 1:1-Beziehung zwischen der Primäranwendung (415) und dem Anwendungsassistenten (411) besteht; und Bereitstellen des Anwendungstokens für den Anwendungsassistenten (411), wobei der Anwendungsassistent (411) API-Anforderungen unter Verwendung des Anwendungstokens im Namen der Primäranwendung (415) verwaltet.

6. Computersystem nach Anspruch 5, wobei der Container-Verwalter (401) ferner zum Initiieren der Primäranwendung (415) und dem ersten Container (417) konfiguriert ist.

7. Computersystem nach Anspruch 5, wobei der Container-Verwalter (401) ferner zum Empfangen einer Erneuerungsanforderung für den Anwendungstoken vom Anwendungsassistenten (411) konfiguriert ist.

8. Computersystem nach Anspruch 7, wobei der Container-Verwalter (401) ferner zum Senden eines erneuerten Anwendungstokens an den Anwendungsassistenten (411) in Reaktion auf die Erneuerungsanforderung konfiguriert ist.

9. Verfahren in einem Anwendungsassistenten (411), der in einem zweiten Container (413) ausgeführt wird, um eine Primäranwendung (415) zu unterstützen, die in einem ersten Container (417) getrennt vom zweiten Container (413) ausgeführt wird, um auf Ressourcen innerhalb einer Virtualisierungsplattform mit der Verwendung von Anwendungstoken zuzugreifen, wobei ein Anwendungstoken Informationen umfasst, die eine Primäranwendung (415) identifizieren und die zum Verwalten von Zugriff auf die Ressourcen für die Primäranwendung (415) verwendet werden können, wobei der Anwendungsassistent (411) spezifisch für die Primäranwendung (415) ist, derart dass eine 1:1-Beziehung zwischen der Primäranwendung (415) und dem Anwendungsassistenten (411) besteht, wobei das Verfahren umfasst:
Empfangen (601) einer Anwendungsprogrammierschnittstellen-,API-,Anforderung von der Primäranwendung (415);
Einfügen (603) eines Anwendungstokens der Primäranwendung (415) in die API-Anforderung; und
Senden (605) der API-Anforderung mit dem Anwendungstoken an einen API-Server (403).

10. Verfahren nach Anspruch 9, ferner umfassend:
Empfangen (607) einer Antwort vom API-Server (403); und
Bestimmen (609), ob die empfangene Antwort einen Fehler anzeigt.

11. Verfahren nach Anspruch 10, ferner umfassend:
Prüfen (613), ob der Fehler anzeigt, dass der Anwendungstoken ungültig oder abgelaufen ist; und
Zurücksenden (611) des Fehlers an die Primäranwendung (415) in Reaktion darauf, dass der Fehler keinen ungültigen oder abgelaufenen Anwendungstoken anzeigt.

12. Verfahren nach Anspruch 9, ferner umfassend:
Anfordern (615) einer Erneuerung des Anwendungstokens von einem Container-Verwalter (401); und
Empfangen (619) eines erneuerten Anwendungstoken vom Container-Verwalter (401).

13. Verfahren nach Anspruch 9, ferner umfassend:
Senden (611, 617) einer Antwort vom API-Server (403) an die Primäranwendung (415).

14. Computersystem, das so konfiguriert ist, dass es ein Verfahren in einem Anwendungsassistenten (411) implementiert, der in einem zweiten Container (413) ausgeführt wird, um eine Primäranwendung (415) zu unterstützen, die in einem ersten Container (417) getrennt vom zweiten Container (413) ausgeführt wird, um auf Ressourcen innerhalb einer Virtualisierungsplattform mit der Verwendung von Anwendungstoken zuzugreifen, wobei ein Anwendungstoken Informationen umfasst, die eine Primäranwendung (415) identifizieren und die zum Verwalten von Zugriff auf die Ressourcen für die Primäranwendung (415) verwendet werden können, wobei der Anwendungsassistent (411) spezifisch für die Primäranwendung (415) ist, derart dass eine 1:l-Beziehung zwischen der Primäranwendung (415) und dem Anwendungsassistenten (411) besteht, wobei das Computersystem umfasst:
ein nicht-transitorisches maschinenlesbares Medium (113), das den Anwendungsassistenten (411) darauf gespeichert aufweist; und
einen Prozessor (111), der mit dem nicht-transitorischen maschinenlesbaren Speichermedium (113) gekoppelt ist, wobei der Prozessor (111) so konfiguriert ist, dass er das Verfahren im Anwendungsassistenten (411) ausführt zum: Empfangen einer Anwendungsprogrammierschnittstellen-,API-,Anforderung von der Primäranwendung (415); Einfügen eines Anwendungstokens der Primäranwendung (415) in die API-Anforderung und Senden der API-Anforderung mit dem Anwendungstoken an einen API-Server (403).

15. Computersystem nach Anspruch 14, wobei der Anwendungsassistent (411) ferner so konfiguriert ist, dass er eine Antwort vom API-Server (403) empfängt und bestimmt, ob die empfangene Antwort einen Fehler anzeigt.

16. Computersystem nach Anspruch 14, wobei der Anwendungsassistent (411) ferner so konfiguriert ist, dass er prüft, ob der Fehler anzeigt, dass der Anwendungstoken ungültig oder abgelaufen ist, und den Fehler in Reaktion darauf, dass der Fehler keinen ungültigen oder abgelaufenen Anwendungstoken anzeigt, an die Primäranwendung (415) zurücksendet.

17. Computersystem nach Anspruch 14, wobei der Anwendungsassistent (411) ferner so konfiguriert ist, dass er eine Erneuerung des Anwendungstokens von einem Container-Verwalter (401) anfordert und einen erneuerten Anwendungstoken vom Container-Verwalter (401) empfängt.

18. Computersystem nach Anspruch 14, wobei der Anwendungsassistent (411) ferner so konfiguriert ist, dass er eine Antwort vom API-Server (403) an die Primäranwendung (415) sendet.

## Revendications

1. Procédé dans un gestionnaire de conteneur (401) pour gérer un accès à des ressources à l'intérieur d'une plate-forme de virtualisation avec l'utilisation de jetons d'application, où un jeton d'application inclut des informations identifiant une application primaire (415) qui peut être utilisée pour gérer un accès aux ressources pour l'application primaire (415), le procédé comprenant :
la génération (307) d'un jeton d'application pour l'application primaire (415), où l'application primaire (415) est exécutée dans un premier conteneur (417) ;
l'instanciation (303) d'un deuxième conteneur (413) et d'une aide d'application (411) à exécuter dans celui-ci, le deuxième conteneur (413) étant distinct du premier conteneur (417), dans lequel l'aide d'application (411) est spécifique à l'application primaire (415) de sorte qu'il existe une relation 1:1 entre l'application primaire (415) et l'aide d'application (411) ; et
la fourniture (309) du jeton d'application à l'aide d'application (411), dans lequel l'aide d'application (411) gère des demandes d'API en utilisant le jeton d'application pour le compte de l'application primaire (415).

2. Procédé selon la revendication 1, comprenant en outre :
le lancement (501) de l'application primaire (415) et du premier conteneur (417).

3. Procédé selon la revendication 1, comprenant en outre :
la réception (619) d'une demande de renouvèlement pour le jeton d'application depuis l'aide d'application (411).

4. Procédé selon la revendication 3, comprenant en outre :
l'envoi (605) d'un jeton d'application renouvelé à l'aide d'application (411), en réponse à la demande de renouvèlement.

5. Système informatique configuré pour mettre en œuvre un procédé dans un gestionnaire de conteneur (401) pour gérer un accès à des ressources à l'intérieur d'une plate-forme de virtualisation avec l'utilisation de jetons d'application, où un jeton d'application inclut des informations identifiant une application primaire (415) qui peut être utilisée pour gérer un accès aux ressources pour l'application primaire (415), le système informatique comprenant :
un support lisible par machine non transitoire (113) sur lequel est stocké un gestionnaire de conteneur (401) ; et
un processeur (111) couplé au support lisible par machine non transitoire (113), le processeur (111) étant configuré pour exécuter le procédé dans le gestionnaire de conteneur (401) pour : générer un jeton d'application pour l'application primaire (415), où l'application primaire (415) est exécutée dans un premier conteneur (417) ; instancier un deuxième conteneur (413) et une aide d'application (411) à exécuter dans celui-ci, le deuxième conteneur (413) étant distinct du premier conteneur (417), dans lequel il existe une relation 1:1 entre l'application primaire (415) et l'aide d'application (411) ; et fournir le jeton d'application à l'aide d'application (411), dans lequel l'aide d'application (411) est configurée pour gérer des demandes d'API en utilisant le jeton d'application pour le compte de l'application primaire (415).

6. Système informatique selon la revendication 5, dans lequel le gestionnaire de conteneur (401) est en outre configuré pour lancer l'application primaire (415) et le premier conteneur (417).

7. Système informatique selon la revendication 5, dans lequel le gestionnaire de conteneur (401) est en outre configuré pour recevoir une demande de renouvèlement pour le jeton d'application depuis l'aide d'application (411).

8. Système informatique selon la revendication 7, dans lequel le gestionnaire de conteneur (401) est en outre configuré pour envoyer un jeton d'application renouvelé à l'aide d'application (411), en réponse à la demande de renouvèlement.

9. Procédé dans une aide d'application (411), exécutée dans un deuxième conteneur (413), pour aider une application primaire (415), exécutée dans un premier conteneur (417) distinct du deuxième conteneur (413), à accéder à des ressources à l'intérieur d'une plate-forme de virtualisation avec l'utilisation de jetons d'application, où un jeton d'application inclut des informations identifiant l'application primaire (415) qui peut être utilisée pour gérer un accès aux ressources pour l'application primaire (415), dans lequel l'aide d'application (411) est spécifique à l'application primaire (415) de sorte qu'il existe une relation 1:1 entre l'application primaire (415) et l'aide d'application (411), le procédé comprenant :
la réception (601) d'une demande d'interface de programmation d'application, API, depuis l'application primaire (415) ;
l'insertion (603) d'un jeton d'application de l'application primaire (415) dans la demande d'API ; et
l'envoi (605) de la demande d'API à un serveur API (403) avec le jeton d'application.

10. Procédé selon la revendication 9, comprenant en outre :
la réception (607) d'une réponse depuis le serveur API (403) ; et
la détermination (609) si la réponse reçue indique une erreur.

11. Procédé selon la revendication 10, comprenant en outre :
la vérification (613) si l'erreur indique que le jeton d'application est invalide ou a expiré ; et
le retour (611) de l'erreur à l'application primaire (415) en réponse au fait que l'erreur n'indique pas un jeton d'application invalide ou expiré.

12. Procédé selon la revendication 9, comprenant en outre :
la demande (615) d'un renouvèlement du jeton d'application depuis un gestionnaire de conteneur (401) ; et
la réception (619) d'un jeton d'application renouvelé depuis le gestionnaire de conteneur (401).

13. Procédé selon la revendication 9, comprenant en outre :
l'envoi (611, 617) d'une réponse depuis le serveur API (403) à l'application primaire (415).

14. Système informatique configuré pour mettre en œuvre un procédé dans une aide d'application (411), exécutée dans un deuxième conteneur (413), pour aider une application primaire (415), exécutée dans un premier conteneur (417) distinct du deuxième conteneur (413), à accéder à des ressources à l'intérieur d'une plate-forme de virtualisation avec l'utilisation de jetons d'application, où un jeton d'application inclut des informations identifiant l'application primaire (415) qui peut être utilisée pour gérer un accès aux ressources pour l'application primaire (415), dans lequel l'aide d'application (411) est spécifique à l'application primaire (415) de sorte qu'il existe une relation 1:1 entre l'application primaire (415) et l'aide d'application (411), le système informatique comprenant :
un support lisible par machine non transitoire (113) sur lequel est stocké l'aide d'application (411) ; et
un processeur (111) couplé au support lisible par machine non transitoire (113), le processeur (111) étant configuré pour exécuter le procédé dans l'aide d'application (411) pour : recevoir une demande d'interface de programmation d'application, API, depuis une application primaire (415) ; insérer un jeton d'application de l'application primaire (415) dans la demande d'API ; et envoyer la demande d'API à un serveur API (403) avec le jeton d'application.

15. Système informatique selon la revendication 14, dans lequel l'aide d'application (411) est en outre configurée pour recevoir une réponse depuis le serveur API (403), et déterminer si la réponse reçue indique une erreur.

16. Système informatique selon la revendication 15, dans lequel l'aide d'application (411) est en outre configurée pour vérifier si l'erreur indique que le jeton d'application est invalide ou a expiré, et retourner l'erreur à l'application primaire (415) en réponse au fait que l'erreur n'indique pas un jeton d'application invalide ou expiré.

17. Système informatique selon la revendication 14, dans lequel l'aide d'application (411) est en outre configurée pour demander un renouvèlement du jeton d'application depuis un gestionnaire de conteneur (401), et recevoir un jeton d'application renouvelé depuis le gestionnaire de conteneur (401).

18. Système informatique selon la revendication 14, dans lequel l'aide d'application (411) est en outre configurée pour envoyer une réponse depuis le serveur API (403) à l'application primaire (415).
